(19) Europäisches Patentamt / European Patent Office / Office européen des brevets

(11) **EP 2 632 871 B1**

(12) **EUROPÄISCHE PATENTSCHRIFT**

(45) Veröffentlichungstag und Bekanntmachung des Hinweises auf die Patenterteilung:
**21.02.2018  Patentblatt 2018/08**

(21) Anmeldenummer: **11779578.1**

(22) Anmeldetag: **21.10.2011**

(51) Int Cl.:
**C04B 28/08** *(2006.01)*    **C04B 22/10** *(2006.01)*
**C04B 103/10** *(2006.01)*

(86) Internationale Anmeldenummer:
**PCT/EP2011/005314**

(87) Internationale Veröffentlichungsnummer:
**WO 2012/055517 (03.05.2012 Gazette 2012/18)**

(54) **HYDRAULISCHER ANREGER FÜR HÜTTENSAND**

HYDRAULIC ACTIVATOR FOR SLAG SAND

ACTIVATEUR HYDRAULIQUE DE LAITIER GRANULÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA**

(30) Priorität: **29.10.2010  DE 102010049784**

(43) Veröffentlichungstag der Anmeldung:
**04.09.2013  Patentblatt 2013/36**

(73) Patentinhaber: **HeidelbergCement AG**
**69120 Heidelberg (DE)**

(72) Erfinder:
• **UNSIN, Joachim**
  **69115 Heidelberg (DE)**
• **BATOG, Barbara**
  **34-480 Jablonka (PL)**

(74) Vertreter: **Zellentin & Partner mbB Patentanwälte**
**Rubensstrasse 30**
**67061 Ludwigshafen (DE)**

(56) Entgegenhaltungen:
| | |
|---|---|
| EP-A1- 0 786 438 | EP-A2- 0 262 302 |
| WO-A1-94/19574 | WO-A2-2010/087636 |
| DE-A1- 3 330 124 | DE-C1- 2 953 652 |
| DE-U1-202005 017 398 | US-A- 5 411 092 |

• DATABASE WPI Week 200963 Thomson Scientific, London, GB; AN 2009-N15926 XP002667339, & CN 101 508 546 A (CHINA RAILWAY SCI RES INST RAILWAY CONST) 19. August 2009 (2009-08-19)

**Beschreibung**

Die vorliegende Erfindung betrifft hydraulische Bindemittel auf Basis von latent-hydraulischem Material wie Hüttensand, die Verwendung des Bindemittels zur Immobilisierung von Schadstoffen, insbesondere von Schwermetallen, deren Löslichkeit bei pH Werten >12 höher als bei niedrigeren pH Werten ist, die Verwendung von Magnesiumhydroxidcarbonat zur Anregung von latent-hydraulischen Materialien und Dichtwandmassen, welche das Bindemittel enthalten.

Hüttensand ist glasig erstarrte, granulierte Hochofenschlacke. Hochofenschlacke entsteht bei der Roheisenerzeugung im Hochofen dadurch, dass sich die $Al_2O_3$- und $SiO_2$- reichen Bestandteile der nichtmetallischen Erzbegleitphasen und der Koksasche beim Schmelzprozess mit dem Kalkzuschlag zu Kalk-Aluminat-Silikaten verbinden. Sie übernimmt damit wichtige metallurgische Aufgaben. Sie befreit das Roheisen vom Schwefel des Kokses, den Ofen von Alkalien und schützt das Roheisen vor der Reoxidation. Die Hochofenschlacke schwimmt auf Grund ihrer geringeren Dichte auf dem Eisen. Durch Optimierung ihrer Zusammensetzung wird der Schmelzpunkt minimiert und durch ihre Dünnflüssigkeit die leichte Trennbarkeit vom flüssigen Eisen sichergestellt. Wird die geschmolzene Hochofenschlacke an der Luft langsam abgekühlt, kristallisiert sie fast vollständig und es entsteht ein stückiges, hartes, hydraulisch inaktives Material. Dieses, als Hochofenstückschlacke bezeichnete Material, verhält sich in fein gemahlenem Zustand gegenüber Wasser praktisch inert. Es wird auf Grund dieser Eigenschaft und seiner Härte z.B. im Straßenbau eingesetzt.

Seit 1862 ist bekannt, dass durch Abschrecken der geschmolzenen Hochofenschlacke mit Wasser ein sandartiges, glasiges Granulat hergestellt werden kann, das latent-hydraulische Eigenschaften besitzt. Bei dieser "Granulierung" wird die Schmelze von ca. 1500°C mit einem bis zu 10-fachen Wasserüberschuss sehr rasch unter die sogenannte Transformationstemperatur von 840°C abgekühlt und zerteilt. Für solche "granulierte" Hochofenschlacken wurde von Beginn des 20. Jahrhunderts an zunehmend der Begriff "Hüttensand" verwendet und 1954 vom Verein Deutscher Eisenhüttenleute als Bezeichnung festgelegt.

Hydraulische Bindemittel können in fein gemahlenem Zustand nach dem Anmachen mit Wasser sowohl an der Luft als auch unter Wasser erhärten. Als hydraulisch werden Materialien bezeichnet, die diese Erhärtung in reinem Zustand zeigen, z.B. Portlandzementklinker. Als latent-hydraulisch werden Materialien dann bezeichnet, wenn sie grundsätzlich über die Fähigkeit verfügen hydraulisch zu erhärten, dazu aber einen oder mehrere Anreger benötigen, wie z.B. Hüttensand. Die Charakterisierung "latent-hydraulisch" wird verwendet, um die besonderen Eigenschaften der Hüttensande und mit ihnen vergleichbarer Bindemittel zu beschreiben. Sie sagt aus, dass ein bestimmtes Bindemittel dem Portlandzement sowohl in seiner Fähigkeit, hydraulisch zu erhärten als auch in seinem Chemismus nahe steht. Ein latent-hydraulisches Bindemittel enthält demnach sowohl reaktives $SiO_2$ als auch reaktives CaO in ausreichend hoher Menge, um mit Hilfe eines äußeren Anstoßes (Anreger) mit Wasser unter Bildung von Calciumsilicathydraten hydraulisch zu erhärten.

Im Unterschied dazu sind Puzzolane oder puzzolanische Materialien natürliche oder industriell hergestellte Stoffe, wie z.B. kalkarme Flugaschen, die reaktives $SiO_2$ alleine oder auch zusammen mit $Al_2O_3$ und/oder $Fe_2O_3$ enthalten, aber nicht selbstständig mit Wasser erhärten können. Puzzolane enthalten entweder kein oder nur sehr wenig CaO. Sie benötigen deshalb, im Gegensatz zu den latent-hydraulischen Bindemitteln, für ein hydraulisches, auf der Bildung von Calciumsilicathydraten beruhendes Erhärten, zwingend einen Zusatz von CaO oder $Ca(OH)_2$.

Nach Angaben des FEhS Institutes für Baustoff - Forschung e.V. aus dem Jahr 2006 waren 142 in den Jahren 1995 bis 2006 untersuchte europäische Hüttensande im Durchschnitt wie in Tabelle 1 dargestellt zusammengesetzt (glühverlustfrei gerechnete Gehalte der Hauptkomponenten in %):

Tabelle 1:

|  | Mittelwert | Min. | Max. |
|---|---|---|---|
| CaO | 39,4 | 30,7 | 45,6 |
| MgO | 8,8 | 3,5 | 17,3 |
| $SiO_2$ | 36,8 | 30,7 | 44,0 |
| $Al_2O_3$ | 11,2 | 5,4 | 16,4 |
| FeO | 0,6 | 0,1 | 2,2 |

Der mittlere Glasgehalt dieser Hüttensande lag bei 95%.

Erhebliche Forschungsaktivitäten haben im Laufe der Zeit dazu geführt, dass bestimmte Stoffgruppen als Anreger der latent-hydraulischen Eigenschaften der Hüttensande identifiziert und nutzbar gemacht werden konnten. Grundsätzlich können im Hinblick auf die hydraulische Aktivität von Hüttensanden derzeit folgende Aussagen als gesichert gelten:

- Eine Erhöhung der Basizität CaO/SiO$_2$ (C/S - Verhältnis) führt zu einer Steigerung der Reaktivität.
- Das hydraulische Erhärtungsvermögen steigt mit zunehmendem Gehalt an CaO und MgO
- Höhere Gehalte an Aluminiumoxid erhöhen die Anfangsfestigkeit. Diese Aussage gilt für den glasigen Anteil des Hüttensandes

Im Wesentlichen spricht man heute von zwei grundsätzlichen Anregungsformen: der alkalischen und der sulfatischen Anregung. Die anregende Wirkung des basischen Kalkhydrates auf Hüttensand wurde früh erkannt und bereits 1865 zur Herstellung von Schlackensteinen kommerziell genutzt. 1879 wurden erstmals hüttensandhaltige Portlandzemente hergestellt und so die anregende Wirkung des bei der Hydratation der Calciumsilicate entstehenden Kalkhydrates zusammen mit den im Portlandzement zusätzlich vorhandenen Alkalihydroxiden genutzt. Das vom Portlandzement freigesetzte Kalkhydrat wirkt hier als Aktivierer der latent-hydraulischen Eigenschaften des Hüttensandes und hat, im Gegensatz zu seiner Rolle bei den Puzzolanen, nicht die Aufgabe, durch Reaktion mit reaktivem SiO$_2$ neue, festigkeitsrelevante Mengen von Calciumsilicathydraten zu bilden.

Die latent-hydraulischen Eigenschaften der Hüttensande haben dazu geführt, dass sie über die Jahrzehnte hinweg in stetig zunehmendem Maße als Bestandteil von Zementen eingesetzt worden sind. Nach EN 197-1 kann in den Portlandhüttenzementen CEM II/A-S und CEM II/B-S Hüttensand zwischen 6 und 35 %, in den Hochofenzementen CEM III/A und CEM III/B zwischen 36 und 80 % enthalten sein und entsprechende Anteile Klinker ersetzen. Da der CaO - Gehalt der Hüttensande im Mittel bei ca. 40 % liegt und damit nur ungefähr 2/3 des mittleren CaO - Gehaltes von Portlandzement CEM I beträgt, ist die Produktion von hüttensandhaltigen Zementen grundsätzlich mit einer Minderung der CO$_2$ Emissionen verbunden, die in einem direkten Verhältnis zu ihrem Hüttensandgehalt steht.

Auch im Hinblick auf seine Dauerhaftigkeit und Widerstandsfähigkeit gegen aggressive, z.B. gegen sulfathaltige- oder schwach saure, Wässer ist ein steigender Hüttensandgehalt im Portlandzement von Vorteil.

Ein wesentliches, limitierendes Kriterium für die Einsatzmenge von Hüttensand im Zement ist allerdings die Tatsache, dass ein zunehmender Ersatz von fein gemahlenem Portlandzementklinker durch Hüttensand vergleichbarer Feinheit in den ersten Tagen nach dem Anmachen mit Wasser zu systematisch abnehmenden Druckfestigkeiten im Mörtel und Beton führt. Während man dieses Phänomen in der Vergangenheit als "geringere Reaktivität" interpretiert hat, sieht man heute den Reaktivitätsbegriff zunehmend differenzierter. Es hat sich gezeigt, dass in ihrer Fähigkeit mit Wasser zu reagieren als "wenig reaktiv" eingestufte, d.h. korrosionbeständigere Hüttensande, in Mischungen mit Portlandzementen regelmäßig zu höheren Frühfestigkeiten führen als gleiche Mischungen mit "reaktiven" Hüttensanden. In diesem Sinne werden zunehmend Versuche unternommen, durch geeignete Additive die Bildung von ungünstigen, zu niedrigeren Druckfestigkeiten führenden Reaktionsprodukten bei den "reaktiven" Hüttensanden zu verhindern.

Im Gegensatz zur alkalischen Anregung, die hauptsächlich bei den hüttensandhaltigen Portlandzementen wirksam ist, beruht die von H. Kühl entdeckte, sulfatische Anregung im ersten Schritt auf der Bildung von Ettringit, d.h. einer direkten chemischen Reaktion zwischen dem Al$_2$O$_3$ - Gehalt der Hüttensande, geringen Mengen zugesetztem Kalkhydrat und 15 bis 20 % zugesetztem Calciumsulfat.

Auch auf dem Gebiet der sogenannten Sulfat-Hüttenzemente gibt es in neuerer Zeit wieder erhebliche Aktivitäten verschiedener Baustoffhersteller, mit dem Ziel, die bekannten Nachteile dieses Bindemittelsystems zu überwinden. Die abnehmenden Frühfestigkeiten durch fortschreitende Verringerung des Al$_2$O$_3$ - Gehaltes der Hüttensande hatten in den 70er Jahren des 20. Jahrhunderts letztlich zur Rücknahme der seit 1937 bestehenden Norm DIN 4210 geführt.

Es ist bisher neben der alkalischen und der sulfatischen Anregung des Hüttensandes, abgesehen von der grundsätzlichen Möglichkeit des Erwärmens, kein weiterer Anregungsmechanismus bekannt.

Aufgabe der Erfindung war es, einen schwach alkalischen Anregungsmechanismus zu schaffen, der im Stande ist, latent-hydraulische Materialien wie fein gemahlene Hüttensande, in erheblicher Erweiterung des Standes der Technik, auch ohne Anwendung der bekannten, hoch alkalischen oder sulfatischen Anregung nach dem Anmachen mit Wasser innerhalb weniger Stunden zu einer festigkeitsbildenden Reaktion zu veranlassen.

Es wurde nun überraschend gefunden, dass das schwach alkalische und nahezu wasserunlösliche Magnesiumhydroxidcarbonat geeignet ist, als Zusatz zu Hüttensand zementüblicher Mahlfeinheit, nach dem Anmachen mit Wasser zu einer Paste oder einem Mörtel, innerhalb kurzer Zeit mit dem Hüttensand praktisch vollständig zu reagieren und dabei einen Erhärtungsvorgang zu bewirken.

Bei Untersuchungen konnte an einer solchen Paste, hergestellt mit einer Ausgangsmischung aus 90 % Hüttensandmehl und 10% Magnesiumhydroxidcarbonat, mit Hilfe der Röntgenbeugungsanalyse nach 8 Stunden praktisch kein Magnesiumhydroxidcarbonat mehr nachgewiesen werden. Die Reaktion zeigt sich äußerlich zusätzlich an einer Blaufärbung. Diese Farbreaktion (im englischen "greening" genannt) tritt typischer Weise bei der Verarbeitung hüttensandhaltiger Zemente in verschiedenen Farbvariationen und -stärken auf und ist für den Zementfachmann ein Zeichen für die hydraulische Reaktion des Hüttensands.

Die obige Aufgabe wird daher gelöst durch ein hydraulisches Bindemittel auf Basis von Hüttensand oder einem anderen latent-hydraulischen Material mit Magnesiumhydroxidcarbonat als Anreger. Die Erfindung bezieht sich auch auf die Verwendung von Magnesiumhydroxidcarbonat als Anreger für Hüttensand und andere latent-hydraulische Materialien, sowie auf Dichtwandmassen und auf die Verwendung eines Bindemittel umfassend Hüttensand und/oder andere latent-hydraulische Materialien und Magnesiumhydroxidcarbonat als Anreger zur Schadstoffimmobilisierung.

Aus WO 2009/156740 A1 ist ein Bindemittel bekannt, bei dem 10 bis 95 % Magnesiumoxid mit 5 bis 80 % eines Magnesiumcarbonates der Formel x $MgCO_3$ • y $Mg(OH)_2$ • z $H_2O$, wobei x $\geq$ 1 und zumindest eines von y und z $\geq$ 0 ist, gemischt wird.

Aus DE 29 53 652 C1 ist es bekannt, einem sulfatisch angeregten Schlackenzement aus 80 % Hüttensand und 20 % Gips ein alkalisches Härtungsmittel ausgewählt aus Natriumhydroxid, Kaliumhydroxid, Calciumoxid, Natriumcarbonat, Kaliumcarbonat und Calciumcarbonat sowie einen Härtungsbeschleuniger ausgewählt aus Magnesiumhydroxid, Aluminiumhydroxid, Magnesiumoxid, Aluminiumoxid, Natriumchlorid, Kaliumchlorid, Calciumchlorid, Magnesiumchlorid, Aluminiumchlorid, Natriumsulfat, Kaliumsulfat, Magnesiumsulfat, Aluminiumsulfat und/oder Magnesiumcarbonat zuzusetzen. In WO 2010/087636 A2 soll ein Natrium-freies, alkalisches Material als Anreger für ein Bindemittel dienen. DE 20 2005 017 398 U1 schlägt vor, einem zementartigen Werkstoff umfassend Geopolymer und Edelstahlschlacke eine Aktivierungskomponente, ausgewählt unter $CaBr_2$, $Ca(NO_3)_2$, $Ca(NO_2)_2$, $CaCl_2$, CaO und NaBr, beizufügen. Die CN 101508546 schlägt $Al(OH)_3$ oder $Li_2CO_3$ als Aktivierer für frostunempfindliche Hüttenzemente vor. Aus EP 786 438 sind härtbare Zusammensetzungen bekannt, bei denen eine spezielle Schlacke alkalisch angeregt wird. Die EP 262 302 betrifft Dichtwandmassen umfassend quellfähiges Tonmineral, Hochofenschlacke, einen OH-Ionen liefernden Anreger, Soda und Kalksteinmehl. Gemäß US 5,411,092 soll ein Bohrlochzement aus Hüttensand, Anreger und $Na_3(PO_4)_2$ erhältlich sein, wobei Natrium-, Calcium- und Kaliumcitrat als Anreger genannt sind. WO 94/19574 betrifft Bohrlochzemente aus Hüttensand, Tensid und Anreger, als Anreger werden NaOH und $Na_2CO_3$ empfohlen.

Aus der EP 1 088 876 B1 ist es bekannt, zur Verfestigung von plastischem Erdmaterial ein trockenes Gemisch aus Zement und Magnesiumcarbonat einzuarbeiten. Dieses bildet ein Gel, durch das überschüssiges Wasser im Erdmaterial gebunden wird, so dass der Boden mechanisch verdichtbar wird.

Eine Wirkung von Magnesiumhydroxidcarbonat als Anreger für Hüttensand ist diesen Dokumenten nicht zu entnehmen.

Für das erfindungsgemäße Bindemittel ist reines Hüttensandmehl als latent-hydraulisches Material bevorzugt. Aber auch in hüttensandhaltigen Bindemittelsystemen, wie sie z.B. in DIN EN 197-1 oder in DIN EN 15743 beschrieben sind, kann die erfindungsgemäße Anregung mit Magnesiumhydroxidcarbonat vorteilhaft zum Einsatz kommen. Weiterhin können kalkarme Flugaschen und andere puzzolanische Materialien mit dem erfindungsgemäßen Anreger aktiviert werden. Unter latent-hydraulischem Material sind erfindungsgemäß alle latent-hydraulischen, überwiegend glasartigen Materialien mit Hüttensand-ähnlicher Zusammensetzung zu verstehen, auch solche, die in einem von der Eisengewinnung unabhängigen Prozess erzeugt werden. Soweit im folgenden von Hüttensand die Rede ist, sind damit auch latent-hydraulische Materialien anderen Ursprungs umfasst. Hüttensand ist jedoch aufgrund seiner Verfügbarkeit derzeit besonders bevorzugt.

Der Hüttensand bzw. das latent-hydraulische Material im erfindungsgemäßen Bindemittel wird in an sich bekannter Weise auf übliche Zementfeinheiten gemahlen. Feinheiten von 3000 bis 8000 $cm^2$/g nach Blaine, vorzugsweise von 4000 bis 6000 $cm^2$/g sind gut geeignet. Die Mahlfeinheit richtet sich in erster Linie nach den angestrebten Eigenschaften des Bindemittels und den zur Verfügung stehenden technischen Möglichkeiten.

Als Magnesiumhydroxidcarbonat kommen erfindungsgemäß Verbindungen mit der allgemeinen Zusammensetzung x $MgCO_3$ • y $Mg(OH)_2$ • z $H_2O$ in Frage, wobei x von 1 bis 4, üblicherweise etwa 4, y üblicherweise etwa 1 und z von 0 bis 5, üblicherweise etwa 4 oder etwa 5, beträgt. Für x, y und z sind nichtganzzahlige Werte möglich. Bevorzugt sind Verbindungen mit x = 4, y = 1 und z = 4 oder z = 5, sowie Verbindungen mit x von 1 bis 3, y = 1 und z von 1 bis 5.

Es kann sich um Magnesiumhydroxidcarbonat natürlichen oder technischen Ursprungs handeln, wie z.B. Hydromagnesit, basisches Magnesiumcarbonat, Magnesia alba, oder um Varianten der genannten Zusammensetzung deren technische Herstellung auf einer Fällungsreaktion beruht. Üblicherweise besitzen gefällte Varianten der Verbindung Magnesiumhydroxidcarbonat eine hohe spezifische Oberfläche n. BET, die in Abhängigkeit von den Fällungsbedingungen z.B. im Bereich von 10 bis 60 $m^2$/g liegen kann. Handelsübliche Qualitäten weisen häufig BET - Werte von 20 bis 30 $m^2$/g auf.

Es hat sich bewährt, wenn das Magnesiumhydroxidcarbonat eine BET-Oberfläche von 20 bis 30 $m^2$/g aufweist. Im Hinblick auf den Wasseranspruch kann die BET Oberfläche bevorzugt im Bereich von 10 - 20 $m^2$/g liegen.

Das Gewichtsverhältnis von latent-hydraulischem Material (Hüttensand und/oder andere latent-hydraulische Materialien) zu Magnesiumhydroxidcarbonat beträgt in der Regel von 99 : 1 bis 70 : 30, vorzugsweise von 98 : 1 bis 75 : 25, besonders bevorzugt von 97 : 3 bis 80 : 20 und ganz besonders bevorzugt von 95 : 5 bis 90 : 10.

Die Erfindung betrifft auch die Kombination von Magnesiumhydroxidcarbonat mit weiteren Additiven, die ergänzend auf die hydraulische Aktivität von Hüttensanden bzw. den latent-hydraulischen Materialien einwirken können.

Vorzugsweise handelt es sich dabei um solche Additive, die in wässriger Lösung oder Aufschlämmung ein mit Hüttensand vergleichbares pH Niveau besitzen. Das trifft z.B. auf Natriumcarbonat und Kaliumcarbonat zu, die in einer 1 %-igen wässrigen Lösung einen pH Wert von 11,5 bzw. 11,6 aufweisen. Natriumcarbonat und Kaliumcarbonat nehmen erfahrungsgemäß auf die hydraulischen Eigenschaften von Hüttensandmehlen in den ersten Tagen wenig Einfluss, aktivieren aber deutlich die spätere Druckfestigkeitsentwicklung und komplettieren damit die erfindungsgemäße Anregung. Überraschend hat sich gezeigt, dass die Wirkung von Natriumcarbonat und Kaliumcarbonat durch den erfindungsgemäßen Zusatz von Magnesiumhydroxidcarbonat ebenfalls früher eintritt. So ist ohne Magnesiumhydroxidcarbonat eine Wirkung innerhalb von 7 bis 8 Tagen zu beobachten, mit Magnesiumhydroxidcarbonat bereits innerhalb von 2 bis 3 Tagen.

Darüber hinaus sind erfindungsgemäß auch Kombinationen von Magnesiumhydroxidcarbonat mit Zusätzen von traditionellen, hoch alkalischen Anregern für Hüttensande möglich. Es sind Anwendungen denkbar, bei denen das Auftreten eines sehr hohen pH Wertes als unproblematisch einzustufen ist. In solchen Fällen kann die Anwendung von traditionellen Anregern wie z.B. Natrium- oder Kaliumhydroxid, Alkalisilikaten, Calciumhydroxid, Portlandzement und dergl. sinnvoll sein und ihre Wirkung wird erfindungsgemäß durch Kombination mit Magnesiumhydroxidcarbonat optimiert.

Vorzugsweise wird die Menge an wasserlöslichen Calciumverbindungen wie z.B. Calciumhydroxid, begrenzt, da Calciumionen durch Ausfällung von Calciumcarbonat die Wirksamkeit des Magnesiumhydroxidcarbonates vermindern könnten. Stöchiometrisch untergeordnete Anteile derartiger Additive, also verhältnismäßig geringe Mengen, gemessen an der eingesetzten Menge Magnesiumhydroxidcarbonat, können aber in bestimmten Fällen sinnvoll oder erforderlich sein.

Grundsätzlich besteht bei dem erfindungsgemäßen System die Möglichkeit, durch Verringerung des Wasser/Zement-Wertes in einem Mörtel oder Beton, erforderlichenfalls unter Zusatz eines oder mehrerer handelsüblicher Betonverflüssiger nach DIN EN 934, z.B. auf Basis von Ligninsulfonaten, sulfoniertem Naphthalin-, Melamin- oder Phenolformaldehydkondensat, oder auf Basis von Acrylsäure-Acrylamidgemischen oder Polycarboxylatethern oder auf Basis von phosphatierten Polykondensaten, in gewohnter Weise die erreichbare Druckfestigkeit in erheblichem Maße zu steigern.

Die erreichbaren Druckfestigkeiten können auch durch Erhöhung des Gehaltes der Mischung an Magnesiumhydroxidcarbonat gesteigert werden. Bei einem relativ hohen Wasseranspruch des verwendeten Magnesiumhydroxidcarbonates ergibt sich ein, ggf. entsprechend erhöhter, Fließmittelbedarf.

Die Festigkeit einer definierten Mischung aus gemahlenem Hüttensand und Magnesiumhydroxidcarbonat nimmt in begrenztem Maße auch mit steigender Mahlfeinheit des eingesetzten Hüttensandmehls und mit steigender Material- und Lagertemperatur der hergestellten Mörtel und Betone zu.

Neben den bereits erwähnten Fließmitteln können erforderlichenfalls auch andere an sich bekannte Zusatzmittel in den üblichen Konzentrationen eingesetzt werden, die meist zwischen 0,1 und 10 Gew.-% bezogen auf das Bindemittel liegen. Unter solchen Zusatzmitteln sind z.B. Betonverflüssiger, Luftporenbildner und Schaumbildner, Dichtungsmittel und Stabilisierer zu verstehen. Zur Herstellung von Beton, Mörtel usw. werden in an sich bekannter Weise geeignete Gesteinskörnungen in der üblichen Menge zugefügt.

Besonders vorteilhaft und von besonderer Bedeutung ist, dass erfindungsgemäß eine zuverlässige hydraulische Anregung von reinem Hüttensandmehl innerhalb weniger Stunden mit schwach basischen Materialien möglich ist. Nach dem Stand der Technik ist nur durch die Anwendung stark basischer Aktivatoren, wie z.B. Calciumhydroxid und Alkalihydroxiden oder Mischungen aus Calciumhydroxid und Alkalicarbonaten oder Kombinationen aus Alkalihydroxiden und -carbonaten, d.h. bei pH Werten von >12,5, eine alkalische Anregung möglich. Portlandzemente sind als solche Anreger wirksam, weil sie während der Hydratation ihrer Calciumsilicate neues Calciumhydroxid in erheblicher Menge bilden und zusätzlich in der Regel ebenfalls wirksame Alkalihydroxide enthalten. Wässrige Aufschlämmungen von Portlandzementen liegen im pH Bereich um 12,5 bis 13.

Auf Zementfeinheit gemahlene Hüttensande weisen in wässrigen Aufschlämmungen üblicherweise deutlich niedrigere pH Werte auf, die im Bereich 11 bis 11,5 liegen. Der pH Wert einer wässrigen Aufschlämmung von erfindungsgemäßem Magnesiumhydroxidcarbonat mit einem Verhältnis Wasser: Feststoff von 90 : 10 liegt bei Werten zwischen 10 und 10,5. Ein auf reinem Hüttensand und Magnesiumhydroxidcarbonat als Aktivator beruhendes Bindemittelsystem weist dementsprechend einen pH Wert im Bereich 10 bis 11 auf und stellt sich damit als ein wesentlicher Fortschritt dar, insbesondere im Hinblick auf eine Anwendung im Zusammenhang mit der Langzeitbeständigkeit alkaliempfindlicher Materialien, wie z.B. Zellulosefasern, Glasfasern usw.

Bei der Verfestigung von Altlasten, also z.B. der Immobilisierung von Schwermetallen in anorganischen Bindemitteln, kann der hohe pH Wert von Portlandzementen durch Bildung schwer löslicher Hydroxide ein Vorteil sein. Dies gilt allerdings nicht für alle Schwermetalle, manche bilden statt dessen wasserlösliche Anionenkomplexe. Hier ist ein pH Wert des Bindemittels von >12 ein Nachteil. In diesen Fällen ist die Anwendung einer erfindungsgemäßen Kombination aus einem latent-hydraulischen Material wie z.B. Hüttensand mit Magnesiumhydroxidcarbonat, ggf. in Kombination mit adsorptiv wirksamen Zusatzstoffen, wie z.B. Zeolithen und bestimmten Tonen, durch den resultierenden, im Vergleich niedrigen pH Wert von Vorteil.

Auch im Hinblick auf die physiologische Unbedenklichkeit der Anwendung von patentgemäßem Magnesiumhydroxidcarbonat ist die Erfindung grundsätzlich vorteilhaft bei allen Anwendungen, bei denen bisher in der Regel mit hoch alkalischen Materialien wie z.B. Kalkhydrat gearbeitet werden muss und Menschen schwer zu vermeidenden, aggressiven Stäuben ausgesetzt sind, wie z.B. bei Maßnahmen zur Bodenverfestigung.

Besonders vorteilhaft ist der erfindungsgemäße Anregungsmechanismus bei Bindemittelsystemen, die überwiegend aus Hüttensandmehl bestehen bzw. einen hohen Anteil an Hüttensandmehl besitzen und sich bereits innerhalb kurzer Zeit, im Bereich weniger Stunden, zuverlässig verfestigen müssen. Die Höhe der nachfolgenden Druckfestigkeitsentwicklung hängt von der Zusatzmenge an Magnesiumhydroxidcarbonat ab und kann auf diese Weise eingestellt werden.

Besonders vorteilhaft lassen sich die erfindungsgemäßen Bindemittel bei solchen Anwendungen nutzen, bei denen keine hohen Anforderungen in Hinsicht auf die erreichbaren Druckfestigkeiten gestellt sind. Zu solchen Bindemitteln gehören z.B. sogenannte Dichtwandmassen, deren Trockenmischungen üblicherweise im wesentlichen aus 40 bis 80 % Hüttensandmehl, Bentonit und wenigen Prozenten Portlandzement bestehen. Der Portlandzementanteil dient dabei überwiegend der hydraulischen Anregung des Hüttensandmehls. Wegen des Eintrags von Calciumionen durch den Portlandzement müssen besondere Anforderungen an den zu verwendenden Bentonit gestellt werden. Durch den erfindungsgemäßen Einsatz von praktisch wasserunlöslichem Magnesiumhydroxidcarbonat als spezifisch wirksamem Anreger für die hydraulische Aktivität des Hüttensandmehls, unter Verzicht auf Portlandzement oder eine Verringerung seines Anteils an der Mischung, können diese Nachteile vermindert oder vermieden werden.

Der erfindungsgemäße Zusatz von Magnesiumhydroxidcarbonat kann erfolgen, indem dieses als Pulver dem Hüttensand zugemischt wird, entweder werksseitig oder vor dem Anmachen. Ebenso ist es denkbar, das Magnesiumhydroxidcarbonat im Anmachwasser zu suspendieren. Auch eine Dosierung als Paste oder als Suspension, ggf. gemeinsam mit Zusatzmitteln, ist denkbar.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10% höhere oder niedrigere Werte oder um 5 % höhere oder niedrigere Werte und in jedem Fall um 1 % höhere oder niedrigere Werte eingeschlossen sind.

In Tabelle 2 sind die beiden Hüttensandmehle I und II, mit denen die im Folgenden beschriebenen patentgemäßen Beispiele durchgeführt wurden, anhand ihrer oxidischen Hauptbestandteile und ihrer Mahlfeinheit charakterisiert.

Tabelle 2:

| Oxid | Einheit | Hüttensand I | Hüttensand II |
|---|---|---|---|
| CaO | % | 37,8 | 39,3 |
| $SiO_2$ | % | 33,4 | 37,8 |
| $Al_2O_3$ | % | 14,3 | 10,9 |
| MgO | % | 9,3 | 8,5 |
| $\dfrac{CaO + MgO}{SiO_2}$ | - | 1,41 | 1,26 |
| $\dfrac{CaO}{SiO_2}$ | - | 1,13 | 1,04 |
| Mahlfeinheit n. Blaine | $cm^2/g$ | 4070 | 4620 |

In Tabelle 3 sind die beiden zur Durchführung der patentgemäßen Beispiele verwendeten Magnesiumhydroxidcarbonate nach Hersteller und spezifischer Oberfläche n. BET charakterisiert.

Tabelle 3:

| Magnesiumhydroxidcarbonat Hersteller | Bezeichnung | Spez. Oberfläche BET [$m^2/g$] |
|---|---|---|
| Merck, Art. Nr. 10 5 828 | MgHC I | 20,41 |

(fortgesetzt)

| Magnesiumhydroxidcarbonat | Bezeichnung | Spez. Oberfläche |
|---|---|---|
| **Hersteller** | | **BET** [m$^2$/g] |
| Sigma - Aldrich, Art. 13117 | MgHC II | 27,78 |

Beispiel 1

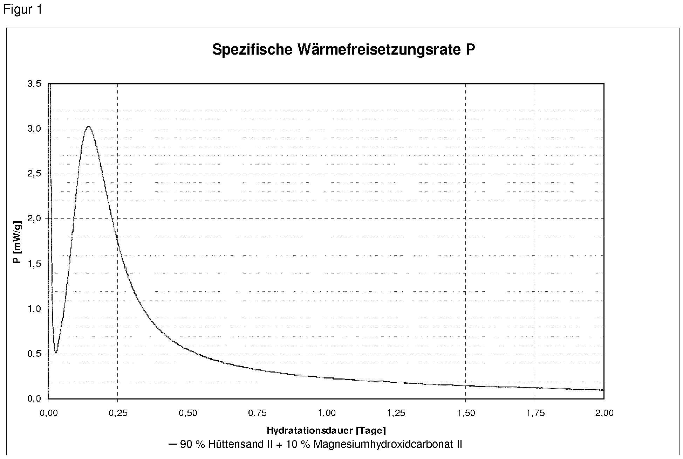

Die Messung des Hydratationsverlaufs an einer Paste mit w/z = 0,40, hergestellt aus einer Mischung von 90 % Hüttensand II (s. Tabelle 2) und 10% Magnesiumhydroxidcarbonat MgHC II mit einem isothermen Differentialkalorimeter (TAM air) ist in Figur 1 dargestellt. Bereits innerhalb von 6 Stunden tritt eine deutliche Wärmeentwicklung auf, welche die hydraulische Reaktion anzeigt.

Beispiel 2

In Tabelle 4 sind die Ergebnisse von pH Messungen an wässrigen Aufschlämmungen (dest. Wasser) der beiden Hüttensandmehle I und II, erfindungsgemäßem Magnesiumhydroxidcarbonat MgHC I und erfindungsgemäßen Mischungen des Hüttensandmehls II mit Magnesiumhydroxidcarbonat MgHC I im Massenverhältnis 90 :10 und 95 : 5 aufgeführt. Das Massenverhältnis Wasser zu Feststoff betrug bei allen Messungen 90 :10. Im gesamten Verlauf der Messungen mit dem pH-Meter wurden die Aufschlämmungen auf einem Magnetrührer gerührt.

Tabelle 4:

| Zeit [min] | Hüttensand I | Hüttensand II | MgHC I | 90% Hüttensand II + 10% MgHC I | 95% Hüttensand II + 5 % MgHC I |
|---|---|---|---|---|---|
| 5 | 11,2 | 11,0 | 10,1 | 10,8 | 10,4 |
| 10 | 11,2 | 11,4 | 10,2 | 10,8 | 10,4 |
| 20 | 11,3 | 11,5 | 10,2 | 10,7 | 10,4 |
| 30 | 11,3 | 11,5 | 10,2 | 10,7 | 10,3 |
| 60 | - | - | - | 10,6 | - |
| 120 | - | - | - | 10,5 | - |
| 240 | - | - | - | 10,5 | - |
| 360 | - | - | - | 10,4 | - |

Die Messungen zeigen einerseits einen sehr ähnlichen pH Wert Verlauf bei den Aufschlämmungen der beiden Hüttensande I und II und andererseits, dass sich bei den Mischungen aus Hüttensandmehl II mit 5 % und mit 10% Magnesiumhydroxidcarbonat MgHC I mit zunehmender Kontaktzeit ein pH Wert einstellt, der deutlich unter demjenigen des reinen Hüttensandmehls liegt und sich dem des Magnesiumhydroxidcarbonats annähert.

Beispiel 3

In Tabelle 5 sind die Druckfestigkeitsentwicklungen in den ersten 7 Tagen dargestellt, die bei einem erfindungsgemäßen Bindemittel, bestehend aus 99 %, 97 % bzw. 95 % Hüttensandmehl I und 1 %, 3 % bzw. 5 % Magnesiumhydroxidcarbonat MgHC II an einem Normenmörtel w/z 0,50 gefunden wurden.

Tabelle 5

| Zusatz MgHC II zu Hüttensand I | Druckfestigkeit [MPa] nach | | | |
|---|---|---|---|---|
| | 1d | 2d | 3d | 7d |
| 0 % | 0,0 | 0,0 | 0,3 | 1,8 |
| 1 % | 0,4 | 0,5 | 0,8 | 2,2 |
| 3 % | 1,1 | 1,2 | 1,3 | 2,3 |

(fortgesetzt)

| Zusatz MgHC II zu Hüttensand I | Druckfestigkeit [MPa] nach | | | |
|---|---|---|---|---|
| | **1d** | **2d** | **3d** | **7d** |
| 5 % | 1,9 | 1,9 | 2,1 | 2,9 |

Es wird deutlich, dass mit steigender Zugabemenge an Magnesiumhydroxidcarbonat die Druckfestigkeit zunimmt und somit gesteuert werden kann.

Beispiel 4

In Tabelle 6 sind die Druckfestigkeitsentwicklungen in den ersten 7 Tagen dargestellt, die bei einem erfindungsgemäßen Bindemittel, bestehend aus 99 %, 97 % bzw. 95 % Hüttensandmehl II und 1 %, 3 % bzw. 5 % Magnesiumhydroxidcarbonat MgHC II an einem Normenmörtel w/z 0,50 bzw. 0,30 gemessen wurden. Der Normenmörtel mit w/z 0,30 wurde unter Zusatz von 1 % eines Fließmittels auf Basis eines Polycarboxylatethers hergestellt.

Tabelle 6

| Zusatz MgHC II zu Hüttensand II | Druckfestigkeit [MPa] nach | | | |
|---|---|---|---|---|
| **w/z 0,50** | **1d** | **2d** | **3d** | **7d** |
| 0% | 0,0 | 0,0 | 0,0 | 2,3 |
| 1% | 0,3 | 0,4 | 0,4 | 2,1 |
| 3% | 1,0 | 1,0 | 1,0 | 1,8 |
| 5% | 1,6 | 1,6 | 1,6 | 2,7 |
| **w/z 0,30** | | | | |
| 5% | 12,5 | 15,0 | 16,8 | 20,8 |

Tabelle 6 zeigt, dass es möglich ist, durch die Verringerung des Wasserzementwertes von 0,50 auf 0,30 bei sachgerechtem Einsatz eines handelsüblichen Fließmittels die zu erreichende Druckfestigkeit in erheblichem Maß zu steigern.

Beispiel 5

Eine Probe des Hüttensandes II wurde auf 3 verschiedene Feinheiten gemahlen: 4620 $cm^2$/g, 6150 $cm^2$/g und 7700 $cm^2$/g n. Blaine. Aus den 3 Mahlungsproben wurden Mischungen aus 95% Hüttensand mit 5% MgHC II hergestellt und unter Zusatz von 0,1 Gew.-% bezogen auf das Bindemittel eines Fließmittels auf Basis eines Polycarboxylatethers ein Normenmörtel mit einem w/z Wert von 0,40 hergestellt. Die Ergebnisse in Tabelle 7 zeigen einerseits den positiven Einfluss des auf 0,40 verringerten w/z Wertes auf die Druckfestigkeit des Hüttensandes II (vergl. Tabelle 6) und den geringeren, aber im frühen Stundenbereich ebenfalls positiven Einfluss einer erhöhten Mahlfeinheit des Hüttensandes II. Der moderate positive Einfluss der Feinheitserhöhung zwischen 4620 und 7700 Blaine auf die Druckfestigkeitsentwicklung des erfindungsgemäßen Bindemittelsystems zeigt, dass auch bei Mahlfeinheiten des Hüttensandes um oder unterhalb 4000 $cm^2$/g bereits mit technisch nutzbaren Druckfestigkeitswerten gerechnet werden kann. Tabelle 7

| 5% Zusatz MgHC II zu Hüttensand II | Druckfestigkeit [MPa] Normenmörtel w/z 0.40 nach | | | | |
|---|---|---|---|---|---|
| **Blainewert [$cm^2$/g]** | **6h** | **8h** | **1d** | **2d** | **7d** |
| 4620 | 2,2 | 2,6 | 4,1 | 4,7 | 5,9 |
| 6150 | 2,6 | 3,0 | 4,1 | 4,6 | 5,9 |
| 7700 | 2,7 | 3,2 | 4,1 | 4,8 | 6,0 |

Beispiel 6

95% Hüttensandmehl II wurden mit jeweils 5% von 5 verschiedenen Zusätzen gemischt: reines Magnesitmehl $MgCO_3$, reines Magnesiumhydroxidpulver $Mg(OH)_2$, je eine Mischung aus Magnesitmehl und Magnesiumhydroxidpulver, die in ihrer stöchiometrischen Zusammensetzung den Formeln $4MgCO_3 \bullet Mg(OH)_2$ und $MgCO_3 \bullet Mg(OH)_2$ entsprachen, sowie reines Dolomitmehl $CaCO_3 \bullet MgCO_3$. Die Mahlfeinheit des Magnesitmehls, des Magnesiumhydroxids und des Dolomitmehls lag bei ca. 5000 $cm^2$/g nach Blaine. Als Vergleichsprobe wurde dem Hüttensandmehl II 5% Magnesiumhydroxidcarbonat $4MgCO_3 \bullet Mg(OH)_2 \bullet 5H_2O$, MgHC II, zugemischt. Aus allen 6 Mischungen wurden mit dest. Wasser Pasten hergestellt und in luftdicht schließenden Plastikbeuteln bei 20°C gelagert. Das Verhältnis Wasser zu Feststoff der Pasten betrug in allen Fällen 0,40.

Es zeigte sich, dass das reine Magnesitmehl, das reine Magnesiumhydroxidpulver, das reine Dolomitmehl und auch die beiden stöchiometrischen Mischungen aus Magnesitmehl und Magnesiumhydroxid innerhalb von 2 Tagen nach dem Anmachen mit Wasser keinerlei Verfestigung der Pasten bewirkte. Demgegenüber zeigte die Paste aus dem Hüttensand II, die erfindungsgemäß mit Magnesiumhydroxidcarbonat MgHC II hergestellt war, bereits innerhalb 4 - 6 Stunden die typische Blaufärbung sowie eine deutliche Verfestigung und nachfolgende Erhärtung. In der Tabelle 8 sind die Ergebnisse dieser Versuche zusammengestellt. Ein oder mehrere "+" zeigen dabei die Verfestigung und den zunehmenden Härtegrad der Paste an. Ein "-" zeigt an, dass keine wahrnehmbare Verfestigung eingetreten ist.

Tabelle 8

| 5% Zusatz zum Hüttensand II | Verfestigung nach | | | |
|---|---|---|---|---|
| | 3h | 7h | 1d | 2d |
| $MgCO_3$ | - | - | - | - |
| $Mg(OH)_2$ | - | - | - | - |
| 4 $MgCO_3$ + 1$Mg(OH)_2$ | - | - | - | - |
| 1 $MgCO_3$ + 1$Mg(OH)_2$ | - | - | - | - |
| Dolomitmehl | - | - | - | - |
| **MgHC II** | + | + | ++ | +++ |

Aus diesen Ergebnissen ist die spezifische Wirksamkeit des erfindungsgemäßen Magnesiumhydroxidcarbonats zu ersehen, die weder durch Magnesiumcarbonat, noch durch Magnesiumhydroxid, noch durch eine dem erfindungsgemäßen Magnesiumhydroxidcarbonat entsprechende, stöchiometrische Mischung aus beiden erreicht werden kann.

**Patentansprüche**

1. Hydraulisches Bindemittel umfassend zumindest ein latent-hydraulisches Material und einen Anreger, **dadurch gekennzeichnet, dass** der Anreger ein Magnesiumhydroxidcarbonat der Formel x $MgCO_3$ • y $Mg(OH)_2$ • z $H_2O$ ist, wobei x für eine Zahl von 1 bis 4, y für 1 und z für eine Zahl von 0 bis 5 steht.

2. Bindemittel gemäß Anspruch 1, **dadurch gekennzeichnet, dass** x = 4, y = 1 und z = 4 oder z = 5 ist oder dass x eine Zahl von 1 bis 3, y = 1 und z eine Zahl von 1 bis 5 ist.

3. Bindemittel gemäß Anspruch 1 oder 2, **dadurch gekennzeichnet, dass** das latent-hydraulische Material ausgewählt ist unter Hüttensand und Gemischen von Hüttensand mit kalkarmer Flugasche.

4. Bindemittel gemäß mindestens einem der Ansprüche 1 bis 3, **dadurch gekennzeichnet, dass** es das oder die latent-hydraulischen Material(ien) und das Magnesiumhydroxidcarbonat im Gewichtsverhältnis von 99 : 1 bis 70 : 30, vorzugsweise von 98 : 1 bis 75 :25, besonders bevorzugt von 97 : 3 bis 80 :20 und ganz bevorzugt von 95 : 5 bis 90 : 10, enthält.

5. Bindemittel gemäß mindestens einem der Ansprüche 1 bis 4, **dadurch gekennzeichnet, dass** es weitere Anreger mit einem pH in wässriger Aufschlämmung bzw. Lösung von unter 12 enthält, vorzugsweise Natriumcarbonat und/oder Kaliumcarbonat alleine oder in Kombination mit Natriumhydrogencarbonat und/oder Kaliumhydrogencarbonat.

6. Bindemittel gemäß mindestens einem der Ansprüche 1 bis 5, **dadurch gekennzeichnet, dass** es weitere Anreger ausgewählt unter Natriumhydroxid, Kaliumhydroxid, Alkalisilikat, Calciumhydroxid und/oder Portlandzement enthält.

7. Bindemittel gemäß mindestens einem der Ansprüche 1 bis 6, **dadurch gekennzeichnet, dass** es eines oder mehrere Zusatzmittel enthält.

8. Bindemittel gemäß mindestens einem der Ansprüche 1 bis 7, **dadurch gekennzeichnet, dass** es Betonverflüssiger und/oder Fließmittel, vorzugsweise auf Basis von Ligninsulfonaten, sulfoniertem Naphthalin-, Melamin- oder Phenolformaldehydkondensat, oder auf Basis von Acrylsäure-Acrylamidgemischen oder Polycarboxylatethern oder auf Basis von phosphatierten Polykondensaten enthält.

9. Verwendung eines hydraulischen Bindemittels gemäß mindestens einem der Ansprüche 1 bis 8 zur Immobilisierung von Schadstoffen.

10. Verwendung gemäß Anspruch 9, **dadurch gekennzeichnet, dass** das Bindemittel adsorptiv wirksame Zusatzstoffe, wie z.B. Zeolithe, Ionenaustauscherharze oder vergleichbar wirkende Zusätze enthält.

11. Verwendung eines Magnesiumhydroxidcarbonat der Formel

$$x\ MgCO_3 \cdot y\ Mg(OH)_2 \cdot z\ H_2O,$$

wobei x für eine Zahl von 1 bis 4, y für 1 und z für eine Zahl von 0 bis 5 steht, als Anreger für latent-hydraulische Materialien.

12. Verwendung gemäß Anspruch 11, **dadurch gekennzeichnet, dass** das latent-hydraulische Material ein Hüttensand ist.

13. Verwendung gemäß Anspruch 11 oder 12, **dadurch gekennzeichnet, dass** das Magnesiumhydroxidcarbonat natürlichen oder technischen Ursprungs ist, z.B. Hydromagnesit, basisches Magnesiumcarbonat, Magnesia alba, oder mittels einer Fällungsreaktion erhalten wird.

14. Dichtwandmasse umfassend Bentonit und ein hydraulisches Bindemittel gemäß einem der Ansprüche 1 bis 8, umfassend ein latent-hydraulisches Material und Magnesiumhydroxidcarbonat der Formel $x\ MgCO_3 \cdot y\ Mg(OH)_2 \cdot z\ H_2O$ ist, wobei x für eine Zahl von 1 bis 4, y für 1 und z für eine Zahl von 0 bis 5 steht, als Anreger.

15. Dichtwandmasse gemäß Anspruch 14, **dadurch gekennzeichnet, dass** das latent-hydraulische Material ein Hüttensand ist.


## Claims

1. Hydraulic binder comprising at least one latent hydraulic material and an activator, **characterised in that** the activator is a magnesium hydroxide carbonate of formula $x\ MgCO_3 \cdot y\ Mg(OH)_2 \cdot z\ H_2O$, wherein x stands for a number from 1 to 4, y stands for 1 and z stands for a number from 0 to 5.

2. The binder according to claim 1, **characterised in that** x = 4, y = 1 and z = 4 or z = 5, or **in that** x is a number from 1 to 3, y = 1 and z is a number from 1 to 5.

3. The binder according to claim 1 or 2, **characterised in that** the latent hydraulic material is selected from ground granulated blast furnace slag and mixtures of ground granulated blast furnace slag with fly ash low in lime.

4. The binder according to at least one of claims 1 to 3, **characterised in that** it contains the latent hydraulic material(s) and the magnesium hydroxide carbonate in a ratio by weight from 99:1 to 70:30, preferably from 98:1 to 75:25, more preferably from 97:3 to 80:20 and most preferably from 95:5 to 90:10.

5. The binder according to at least one of claims 1 to 4, **characterised in that** it contains further activators with a pH in aqueous suspension or solution of less than 12, preferably sodium carbonate and/or potassium carbonate alone or in combination with sodium hydrogen carbonate and/or potassium hydrogen carbonate.

6. The binder according to at least one of claims 1 to 5, **characterised in that** it contains further activators selected from sodium hydroxide, potassium hydroxide, alkali silicate, calcium hydroxide and/or portland cement.

7. The binder according to at least one of claims 1 to 6, **characterised in that** it contains one or more concrete admixtures.

8. The binder according to at least one of claims 1 to 7, **characterised in that** it contains plasticisers and/or superplasticisers, preferably on the basis of lignosulfonates, sulfonated naphthalene condensate, melamine condensate or phenol-formaldehyde condensate, or on the basis of acrylic acid/acrylamide mixtures or polycarboxylate ethers, or on the basis of phosphated polycondensates.

9. Use of a hydraulic binder according to at least one of claims 1 to 8 for immobilising hazardous waste.

10. The use according to claim 9, **characterised in that** the binder contains adsorptively effective additives, such as zeolites, ion exchange resins or comparably acting additions.

11. Use of a magnesium hydroxide carbonate of formula

$$x\ MgCO_3 \cdot y\ Mg(OH)_2 \cdot z\ H_2O,$$

wherein x stands for a number from 1 to 4, y stands for 1 and z stands for a number from 0 to 5, as an activator for latent hydraulic materials.

12. The use according to claim 11, **characterised in that** the latent hydraulic material is a ground granulated blast furnace slag.

13. The use according to claim 11 or 12, **characterised in that** the magnesium hydroxide carbonate is of natural or engineered origin, for example hydromagnesite, alkali magnesium carbonate, magnesia alba, or is obtained by means of a precipitation reaction.

14. Seal wall compound comprising bentonite and a hydraulic binder according to one of claims 1 to 8, comprising a latent hydraulic material and magnesium hydroxide carbonate of formula $x\ MgCO_3 \cdot y\ Mg(OH)_2 \cdot z\ H_2O$, wherein x stands for a number from 1 to 4, y stands for 1 and z stands for a number from 0 to 5 as acitvator.

15. The seal wall compound according to claim 14, **characterised in that** the latent hydraulic material is a ground granulated blast furnace slag.

**Revendications**

1. Liant hydraulique comprenant au moins un matériau hydraulique latent et un activateur, **caractérisé en ce que** l'activateur est un hydroxycarbonate de magnésium de formule $x\ MgCO_3 \cdot y\ Mg(OH)_2 \cdot z\ H_2O$, x représentant un nombre allant de 1 à 4, y représentant 1 et z représentant un nombre allant de 0 à 5.

2. Liant selon la revendication 1, **caractérisé en ce que** x = 4, y = 1 et z = 4 ou z = 5 ou que x est un nombre allant de 1 à 3, y = 1 et z est un nombre allant de 1 à 5.

3. Liant selon la revendication 1 ou 2, **caractérisé en ce que** le matériau hydraulique latent est sélectionné parmi le laitier granulé et un mélange de laitier granulé avec des cendres volantes pauvres en calcaire.

4. Liant selon au moins une des revendications 1 à 3, **caractérisé en ce qu'**il contient le(s) matériau(x) hydraulique(s) latent(s) et l'hydroxycarbonate de magnésium dans un rapport pondéral allant de 99:1 à 70:30, de préférence de 98:1 à 75:25, de manière particulièrement préférée de 97:3 à 80:20 et de manière tout particulièrement préférée de 95:5 à 90:10.

**5.** Liant selon au moins une des revendications 1 à 4, **caractérisé en ce qu'**il contient d'autres activateurs avec un pH en suspension ou solution aqueuse de moins de 12, de préférence du carbonate de sodium et/ou du carbonate de potassium seul ou en association avec de l'hydrogénocarbonate de sodium et/ou de l'hydrogénocarbonate de potassium.

**6.** Liant selon au moins une des revendications 1 à 5, **caractérisé en ce qu'**il contient d'autres activateurs choisis parmi l'hydroxyde de sodium, l'hydroxyde de potassium, le silicate alcalin, l'hydroxyde de calcium et/ou le ciment de Portland.

**7.** Liant selon au moins une des revendications 1 à 6, **caractérisé en ce qu'**il contient un ou plusieurs additifs pour béton.

**8.** Liant selon au moins une des revendications 1 à 7, **caractérisé en ce qu'**il contient un liquéfiants et/ou un fluidifiants, de préférence à base de lignosulfonates, de condensat de naphtalène sulfonée, de mélamine ou de phénolformaldéhyde ou à base de mélange d'acide acrylique et d'acrylamide ou d'éthers de polycarboxylate ou à base de polycondensats phosphatés.

**9.** Utilisation d'un liant hydraulique selon au moins une des revendications 1 à 8 destinée à l'immobilisation de polluants.

**10.** Utilisation selon la revendication 9, **caractérisée en ce que** le liant contient des adjuvants agissant par adsorption, tels que les zéolithes, les résines échangeuses d'ions ou des adjuvants à efficacité comparable.

**11.** Utilisation d'un hydroxycarbonate de magnésium de formule

$$x \, MgCO_3 \cdot y \, Mg(OH)_2 \cdot z \, H_2O,$$

où x représente un nombre allant de 1 à 4, y représente 1 et z représente un nombre allant de 0 à 5, en tant qu'activateur de matériaux hydrauliques latents.

**12.** Utilisation selon la revendication 11, **caractérisée en ce que** le matériau hydraulique latent est un laitier granulé.

**13.** Utilisation selon la revendication 11 ou 12, **caractérisée en ce que** l'hydroxycarbonate de magnésium est d'origine naturelle ou technique, par exemple l'hydromagnésite, le carbonate de magnésium de base, magnesia alba, ou est conservé par le biais d'une réaction de précipitation.

**14.** Masse d'étanchéité comprenant la bentonite et un liant hydraulique selon l'une des revendications 1 à 8, comprenant un matériau hydraulique latent et un hydroxycarbonate de magnésium de formule $x \, MgCO_3 \cdot y \, Mg(OH)_2 \cdot z \, H_2O$, x représentant un nombre allant de 1 à 4, y représentant 1 et z représentant un nombre allant de 0 à 5, en tant qu'activateur.

**15.** Masse d'étanchéité selon la revendication 14, **caractérisée en ce que** le matériau hydraulique latent est un laitier granulé.

Figur 1

**Spezifische Wärmefreisetzungsrate P**

Hydratationsdauer [Tage]
— 90 % Hüttensand II + 10 % Magnesiumhydroxidcarbonat II

**IN DER BESCHREIBUNG AUFGEFÜHRTE DOKUMENTE**

**In der Beschreibung aufgeführte Patentdokumente**

- WO 2009156740 A1
- DE 2953652 C1
- WO 2010087636 A2
- DE 202005017398 U1
- CN 101508546
- EP 786438 A
- EP 262302 A
- US 5411092 A
- WO 9419574 A
- EP 1088876 B1